(19) **Europäisches Patentamt / European Patent Office / Office européen des brevets**

(11) **EP 2 122 177 B1**

(12) ## EUROPÄISCHE PATENTSCHRIFT

(45) Veröffentlichungstag und Bekanntmachung des Hinweises auf die Patenterteilung:
**21.11.2018 Patentblatt 2018/47**

(21) Anmeldenummer: **08715892.9**

(22) Anmeldetag: **20.02.2008**

(51) Int Cl.:
***F04D 15/00*** *(2006.01)*

(86) Internationale Anmeldenummer:
**PCT/EP2008/001321**

(87) Internationale Veröffentlichungsnummer:
**WO 2008/101687 (28.08.2008 Gazette 2008/35)**

(54) **PUMPENAGGREGAT**

PUMP UNIT

GROUPE MOTOPOMPE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.02.2007 DK 200700276**

(43) Veröffentlichungstag der Anmeldung:
**25.11.2009 Patentblatt 2009/48**

(73) Patentinhaber: **Grundfos Management A/S 8850 Bjerringbro (DK)**

(72) Erfinder:
 • **KNUDSEN, Ivan 8840 Rødekærsbro (DK)**

 • **THORSAGER DISSING, Torben 8850 Bjerringbro (DK)**

(74) Vertreter: **Hemmer, Arnd et al Patentanwälte Vollmann & Hemmer Wallstrasse 33a 23560 Lübeck (DE)**

(56) Entgegenhaltungen:

| | |
|---|---|
| **EP-A- 1 201 932** | **EP-A- 1 495 773** |
| **EP-A1- 1 554 969** | **DE-A1- 2 532 436** |
| **FR-A- 2 655 599** | **GB-A- 324 156** |
| **US-A- 3 431 858** | **US-A1- 2006 038 529** |

**Beschreibung**

Die Erfindung betrifft ein Pumpenaggregat mit einer Pumpe und einem elektrischen Antriebsmotor sowie einer elektronischen Steuereinrichtung.

Derartige Pumpenaggregate werden für verschiedenste Zwecke eingesetzt, beispielsweise als Tauchpumpen zur Wasserförderung. Insbesondere bei Ausgestaltung als Zentrifugalpumpen ist es wichtig, dass sich der Rotor bzw. das Laufrad der Pumpe in einer vorbestimmten Drehrichtung dreht. Dreht sich das Laufrad in entgegengesetzter Drehrichtung, weist die Pumpe einen verschlectorton Wirkungsgrad auf. Daher ist es bei der Inbetriebnahme der Pumpen wichtig, die korrekte Drehrichtung sicherzustellen. Die Drehrichtung des Antriebsmotors hängt jedoch in der Regel vom elektrischen Anschluss ab. Das bedeutet, die Phasen müssen richtig angeschlossen sein, um die korrekte Drehrichtung des Antriebsmotors für die korrekte Drehrichtung des Pumpenlaufrads bzw. der Pumpenlaufräder zu erreichen. Daher ist es bei Inbetriebnahme solcher Pumpenaggregate stets erforderlich, die korrekte Drehrichtung zu überprüfen und ggf. den elektrischen Anschluss durch Tauschen der Phasen so zu ändern, dass die korrekte Drehrichtung eingestellt ist. Dies macht die Inbetriebnahme des Pumpenaggregates recht umständlich. Insbesondere, wenn es sich um Tauchpumpen handelt, welche im Betrieb nicht sichtbar und nicht zugänglich sind, ist es schwierig die korrekte Drehrichtung zu überprüfen.

GB 324,156 A offenbart eine Druckregelung für eine Gruppe von Pumpen, Kompressoren, oder ähnlichem. Gemäß diesem System ist jeder Maschine, d. h. jeder Pumpe ein elektrischer Motor zur Drehzahlregelung der Maschine zugeordnet. Der elektrische Motor ist in seiner Drehrichtung umkehrbar, um die Geschwindigkeit bzw. Drehzahl der Maschine zu erhöhen oder zu reduzieren.

EP1554969A1 offenbart ein Verfahren zum Antrieb eines bidirektionalen Motors zum Antrieb einer Zirkulationspumpe in einer Geschirrspülmaschine. Bei dem Motor handelt es sich um einen Motor, welcher zufällig in einer der möglichen Drehrichtungen anläuft und nicht gezielt in einer gewünschten Drehrichtung gestartet werden kann. Um aufwändige Steuereinrichtungen zu vermeiden, ist in diesem Stand der Technik vorgeschlagen, den Motor mehrfach nacheinander zufällig anlaufen zu lassen, bis er zufällig in der optimalen Drehrichtung rotiert.

Es ist Aufgabe der Erfindung, eine verbesserte Zentrifugalpumpe bereitzustellen, bei welcher auf einfache Weise bei der Inbetriebnahme sichergestellt werden kann, dass die Pumpe in der optimalen Drehrichtung angetrieben wird.

Diese Aufgabe wird durch ein Pumpenaggregat mit den in Anspruch 1 angegebenen Merkmalen gelöst. Bevorzugte Ausführungsformen ergeben sich aus den Unteransprüchen, der Beschreibung sowie den Figuren.

Das Pumpenaggregat ist als Zentrifugalpumpe ausgebildet. Bei derartigen Zentrifugalpumpen hängt der Wirkungsgrad stark von der Drehrichtung ab, sodass es bei diesen Pumpen vorteilhaft ist, sicherzustellen, dass die Pumpe in der korrekten Drehrichtung betrieben wird.

Erfindungsgemäß weist die elektronische Steuereinrichtung des Pumpenaggregates ein Drehrichtungserkennungsmodul zum Erkennen der korrekten Drehrichtung des Antriebsmotors und der Pumpe auf. Das Drehrichtungserkennungsmodul weist Mittel zum Erfassen zumindest eines Leistungskennwertes des Pumpenaggregates auf und ist derart ausgestaltet, dass es bei Drehung des Antriebsmotors zumindest einen Leistungskennwert erfasst und durch Auswertung des Leistungskennwertes die korrekte Drehrichtung ermittelt. D.h. erfindungsgemäß ist die Steuereinrichtung des Pumpenaggregates mit Mitteln versehen, um die korrekte Drehrichtung selbsttätig zu erkennen. D.h. hier muss im Idealfall im Anschluss die Bedienperson nicht umständlich die Drehrichtung feststellen und auf den korrekten Anschluss achten, vielmehr ermittelt die Pumpe die korrekte Drehrichtung selber. Dabei kann die Pumpe entweder die korrekte Drehrichtung selbsttätig einstellen, wie nachfolgend näher beschrieben wird oder der Bedienperson lediglich den falschen Anschluss signalisieren, sodass diese den elektrischen Anschluss richtigstellen kann.

Durch die Auswertung der Leistungskennwerte kann festgestellt werden, ob die Pumpe mit dem maximalen Wirkungsgrad betrieben wird, welche nur bei korrekter Drehrichtung erreicht wird. Die korrekte Drehrichtung kann dabei aus den Leistungskennwerten auf verschiedene Weise, beispielsweise durch Vergleich mit vorbestimmten, in der Steuereinrichtung bzw. dem Drehrichtungserkennungsmodul hinterlegten Vergleichswerten ermittelt werden oder durch Vergleich erfasster Leistungskennwerte bei verschiedenen Drehrichtungen ermittelt werden.

Das Pumpenaggregat bzw. dessen elektronische Steuereinrichtung weist einen Frequenzumrichter zur Drehzahlsteuerung des Antriebsmotors auf. Dabei kann das Drehrichtungserkennungsmodul in den Frequenzumrichter integriert sein, bzw. unmittelbar mit diesem zusammenwirken. Insbesondere ist es durch entsprechende Ansteuerung des Frequenzunrichters möglich, die Drehrichtung des Antriebsmotors zu ändern. So kann das Drehrichtungserkennungsmodul beispielsweise über den Frequenzumrichter die Pumpe nacheinander in zwei Drehrichtung drehen lassen, um die Leistungskennwerte bei den beiden Drehrichtungen zu erfassen und daraus die korrekte Drehrichtung zu ermitteln bzw. zu erkennen.

Der Frequenzumrichter und der Drehrichtungserkennungsmodul sind ferner derart ausgestaltet bzw. miteinander integriert oder verknüpft, dass sie zusammenwirken, sodass der Frequenzumrichter die Drehrichtung des Antriebsmotors entsprechend der ermittelten korrekten Drehrichtung einstellt. D.h. nachdem das Drehrichtungserkennungsmodul die korrekte Drehrichtung bei dem vorgegebenen Anschluss ermittelt hat, kann der Frequenzumrichter so angesteuert werden, dass genau diese ermittelte korrekte Drehrichtung beim Betrieb der Pumpe verwendet wird. D.h. bei Verwendung eines Frequenzumrichters in einer Steuereinrichtung, welche ein Drehrichtungserkennungsmodul gemäß der Erfindung aufweist, wird es möglich nach erfolgtem elektrischen Anschluss des Pumpenaggregates die korrekte Drehrichtung automatisch zu erkennen und allein durch Steuerung des Frequenzumrichters die korrekte Drehrichtung beim Betrieb einzustellen, ohne dass die elektrischen Anschlüsse zu Richtigstellung der Drehrichtung geändert werden müssten.

Gemäß einer ersten bevorzugten Ausführungsform ist das Drehrichtungserkennungsmodul derart ausgebildet, dass es den zumindest einen erfassten Leistungskennwert mit einem bekannten vorgegebenen oder vorgebbaren Leistungskennwert vergleicht. Dadurch ist feststellbar, ob der Sollwirkungsgrad erreicht wird. Wird dieser Wirkungsgrad, d.h. der vorgegebene Leistungskennwert nicht erreicht, kann daraus geschlossen werden, dass die falsche Drehrichtung gegeben ist. Der bekannte Leistungskennwert bzw. Soll-Leistungskennwert kann dazu in einem Speicher in der Steuereinrichtung bzw. deren Drehrichtungserkennungsmodul hinterlegt sein. Ferner könnten an der Steuereinrichtung auch Eingabemittel vorgesehen sein, über welche ein Soll-Leistungskennwert von einer Bedienperson eingegeben werden kann und/oder aus mehreren gespeicherten ausgewählt werden kann, um einen Soll- oder Vergleichs- Leistungskennwert für eine bestimmte Einsatzsituation vorzugeben.

Der zumindest eine Leistungskennwert, welcher von dem Drehrichtungserkennungsmodul erfasst und ausgewertet wird, kann beispielsweise der Druck und/oder der Durchfluss und/oder die Leistung des Antriebsmotors sein. Zur Erfassung der Leistungskennwerte können grundsätzlich entsprechende Sensoren in dem Pumpenaggregat angeordnet sein. Beispielsweise kann ein Drucksensor an der Ausgangsseite der Pumpe vorgesehen sein, um den Ausgangsdruck an der Pumpe zu erfassen. Ferner kann ein Durchflusssensor vorgesehen sein, um den Durchfluss der Pumpe zu bestimmen. Wenn beide Größen erfasst werden, kann aus diesen ebenfalls die hydraulischer Leistung ermittelt werden und als Leistungskennwert zugrunde gelegt werden. Hierzu kann die Steuereinrichtung oder deren Drehrichtungserkennungsmodul eine Berechnungseinheit zur Bestimmung der aktuellen hydraulischen Leistung aus den von den Sensoren erfassten Daten aufweisen. Die Leistung des Antriebsmotors kann auf verschiedene Weise, beispielsweise durch einen Stromsensor oder auch aus anderen aktuellen Kennwerten des Motors erfasst werden.

Das Drehrichtungserkennungsmodul ist weiter bevorzugt derart ausgebildet, dass zum Erkennen der korrekten Drehrichtung bei Drehung des Antriebsmotors in beiden Drehrichtungen jeweils zumindest ein Leistungskennwert erfasst und die korrekte Drehrichtung durch Vergleich der erfassten Kennwerte erkennt. D.h. bei beiden Drehrichtungen wird derselbe zumindest eine Leistungskennwert erfasst. Durch Vergleich der beiden erfassten Leistungskennwerte kann dann von dem Drehrichtungserkennungsmodul erkannt werden, welches die korrekte Drehrichtung ist. Zur Erfassung der Leistungskennwerte in beiden Drehrichtungen wird der Antriebsmotor nacheinander in beiden Drehrichtungen bei sonst identischen Randbedingungen angetrieben. Insbesondere erfolgt der Antrieb bei derselben Drehzahl, sodass bevorzugt als einziger Parameter die Drehrichtung verändert wird.

Dazu ist die Steuereinrichtung weiter bevorzugt derart ausgebildet, dass das Drehrichtungserkennungsmodul zum Erkennen der korrekten Drehrichtung die Steuereinrichtung automatisch zum Drehen des Antriebsmotors in beiden Drehrichtungen veranlasst. D.h. die Steuereinrichtung kann so ausgebildet sein, dass bei Inbetriebnahme des Pumpenaggregates zunächst das Drehrichtungserkennungsmodul veranlasst wird, die richtige Drehrichtung bzw. die korrekte Drehrichtung zu ermitteln. Dazu kann das Drehrichtungserkennungsmodul dann die Steuereinrichtung und beispielsweise einen Frequenzumrichter veranlassen, den Antriebsmotor nacheinander in beiden Drehrichtungen anzutreiben, um bei beiden Drehrichtungen Leistungskennwerte zu erfassen und diese dann zur Erkennung der Drehrichtung auszuwerten. Alternativ ist es auch möglich, dass die Drehung in beide Drehrichtungen manuell von einer Bedienperson, beispielsweise nach Aufforderung durch die Steuereinrichtung bzw. das Drehrichtungserkennungsmodul gestartet wird.

Dabei ist es denkbar, dass die Drehrichtung manuell durch Änderung des elektrischen Anschlusses geändert wird. Die Aufforderung kann beispielsweise durch Anzeigemittel, Anzeigeleuchten, ein Display oder Ähnliches, welche mit der Steuereinrichtung und dem Drehrichtungserkennungsmodul zusammen wirken, erfolgen.

Weiter bevorzugt weist das Drehrichtungserkennungsmodul Mittel zum Erfassen mindestens zweier Leistungskennwerte auf und ist derart ausgestaltet, dass ein Erkennen der korrekten Drehrichtung durch Auswertung mindestens zweier Leistungskennwerte erfolgt. D. h. in dem Pumpenaggregat sind Sensoren zum Erfassen zumindest zweier Leistungskennwerte vorgesehen, deren Ausgangsignal dem Drehrichtungserkennungsmodul zugeführt wird. Das Drehrichtungserkennungsmodul ist so ausgebildet, dass es die zumindest zwei erfassten Leistungskennwerte zur Bestimmung der korrekten Drehrichtung berücksichtig, d.h. gemeinsam auswertet. Es ist zu verstehen, dass auch mehr als zwei Leistungskennwerte erfasst werden können, um eine zuverlässigere Bestimmung der korrekten Drehrichtung zu ermöglichen. Die Berücksichtigung mehrerer Leistungskennwerte ist insbesondere deshalb von Vorteil, da es aufgrund von Messfehlern bzw. des Messrauschens bei der Erfassung der Leistungskennwerte für die einzelnen Leistungskennwerte Bereiche geben kann, in denen eine genaue Unterscheidung zwischen der falschen und der korrekten Drehrichtung nicht möglich ist. In diesen Bereichen kann dann eine größere Sicherheit durch die Berücksichtigung eines zweiten Leistungskennwertes erreicht werden.

Gemäß einer weiteren bevorzugten Ausführungsform ist das Drehrichtungserkennungsmodul mit einer Signaleinrichtung versehen und derart ausgebildet, dass für den Fall, dass die korrekte Drehrichtung auf Grundlage des zumindest einen erfassten Leistungskennwertes von dem Drehrichtungserkennungsmoduls nicht erkannt werden kann, dies mittels der Signaleinrichtung signalisiert. D.h. in Bereichen, in denen beispielsweise aufgrund des auftretenden Messrauschens bei der Erfassung der Leistungskennwerte eine genaue Unterscheidung zwischen falscher und korrekter Drehrichtung nicht möglich ist, kann das Drehrichtungserkennungsmodul einer Bedienperson durch die Signaleinrichtung, beispielsweise ein Anzeigeelement in Form einer Kontrollleuchte oder eine Textausgabe auf einem Display der Steuereinrichtung, signalisieren, dass die Erkennung der Drehrichtung durch die automatische Routine nicht möglich war. Die Bedienperson hat dann die Möglichkeit, die korrekte Drehrichtung manuell zu bestimmen. Dazu ist das Drehrichtungserkennungsmodul vorzugsweise so ausgebildet, dass manuell beide Drehrichtungen aktiviert werden können und möglicherweise bestimmte Leistungskennwerte erfasst und angezeigt werden, welche es der Bedienperson ermöglichen, eine Entscheidung zu treffen, welches die korrekte Drehrichtung ist. Die Ansteuerung in beiden Drehrichtungen ist insbesondere dann möglich, wenn das Drehrichtungserkennungsmodul mit einem Frequenzumrichter zur Ansteuerung des Antriebsmotors gekoppelt ist bzw. zusammenwirkt. Der Frequenzumrichter kann dann so angesteuert werden, dass beide Drehrichtungen aktiviert werden können.

Gemäß einer weiteren bevorzugten Ausführungsform ist das Drehrichtungserkennungsmodul derart ausgebildet, dass ein Erfassen und Auswerten des zumindest einen Leistungskennwertes bei zumindest zwei verschiedenen Drehzahlen des Antriebsmotors möglich ist. Dies ermöglicht die Überprüfung der korrekten Drehrichtung bei verschiedenen Drehzahlen, sodass diejenige Drehzahl gewählt werden kann, bei welcher beispielsweise abhängig von den jeweiligen Einsatzbedingungen die zuverlässigste Erkennung der korrekten Drehrichtung möglich ist. Auch diese Ausführungsform ist bevorzugt in Kombination mit einem Frequenzumrichter zur Ansteuerung des Antriebsmotors verwirklicht, da über diesen Frequenzumrichter die Drehzahl des Antriebsmotors und/oder die Drehrichtung des Antriensmotors durch entsprechende Ansteuerung geändert werden kann.

Weiter bevorzugt ist das Drehrichtungserkennungsmodul derart ausgestaltet, dass ein Erfassen und Auswerten des zumindest einen Leistungskennwertes zunächst bei einer ersten Drehzahl erfolgt und in dem Fall, dass ein Erkennen der korrekten Drehrichtung bei dieser Drehzahl nicht möglich ist, bei zumindest einer zweiten, vorzugsweise höheren Drehzahl wiederholt wird. Wenn bei dieser zweiten Drehzahl wiederum keine genaue Erkennung der korrekten Drehrichtung möglich ist, kann die Drehzahl nochmals geändert, vorzugsweise nochmals erhöht werden. Dies kann so lange geschehen, bis die Maximaldrehzahl erreicht ist. Sollte bis dahin keine Erkennung der korrekten Drehrichtung möglich sein, wird dann vorzugsweise von dem Drehrichtungserkennungsmodul über eine Signaleinrichtung der Bedienperson angezeigt, dass die automatische Erkennung der korrekten Drehrichtung nicht möglich ist. Durch Änderung und insbesondere Erhöhung der Drehzahl bei der Drehrichtungserkennung ist es möglich, die Bereiche, in denen aufgrund von Messfehlern bzw. Messrauschen eine zuverlässige Bestimmung der korrekten Drehrichtung nicht möglich ist, zu verlassen und so dann die korrekte Drehrichtung zu bestimmen. Vorzugsweise erfolgt die Drehzahländerung über einen Frequenzumrichter, der entsprechend mit dem Drehrichtungserkennungsmodul gekoppelt ist, sodass das Drehrichtungserkennungsmodul den Frequenzumrichter veranlassen kann, den Antriebsmotor mit einer vorbestimmten Drehzahl und vorzugsweise wahlweise in beiden Drehrichtungen rotieren zu lassen, um dann bei diesen Einstellungen die Leistungskennwerte durch geeignete Sensoren zu erfassen und in dem Drehrichtungserkennungsmodul auszuwerten, um die korrekte Drehrichtung zu erkennen.

Das Drehrichtungserkennungsmodul ist vorzugsweise als Mikroprozessor ausgebildet, in dem die erforderlichen Berechnungen basierend auf den erfassten Leistungskennwerten zur Bestimmung der Drehrichtung ausgeführt werden. Dazu kann in der Steuereinrichtung ein spezieller Mikroprozessor vorgesehen sein. Alternativ ist es auch möglich, das Drehrichtungserkennungsmodul als Programm in einem Mikroprozessor ablaufen zu lassen, welcher noch für weitere Funktionen im Zusammenhang mit Steuerung und Diagnose des Pumpenaggregates vorgesehen ist. Die Sensoren zur Erfassung der Leistungskennwerte sind dazu mit dem Mikroprozessor zur Datenübertragung verbunden, wobei ein Analog-Digital-Wandler vorgesehen sein kann, um die Ausgangssignale der Sensoren zu digitalisieren.

Ferner kann das Drehrichtungserkennungsmodul einen Speicher aufweisen, in dem Sollwerte für die Leistungskennwerte hinterlegt sind. Das Drehrichtungserkennungsmodul kann dann einen Vergleichen aufweisen, welcher die aktuell ermittelten Leistungskennwerte mit den zuvor hinterlegten Leistungskennwerten vergleicht, um die richtige Drehrichtung zu ermitteln. Diese Ausgestaltung kann insbesondere dann zum Einsatz kommen, wenn die Soll-Leistungskennwerte für die korrekte Drehrichtung bei den gewählten Einsatzbedingungen vorbekannt sind und somit ein Vergleich mit solchen vorgegebenen Leistungskennwerten möglich ist. In dem Fall, dass derartige Soll-Leistungskennwerte nicht bekannt sind, weil beispielsweise die Umgebungsbedingungen, in denen das Pumpenaggregat eingesetzt wird, nicht vorbekannt sind, ist das Drehrichtungserkennungsmodul vorzugsweise so ausgestaltet, dass Leistungskennwerte bei beiden Drehrichtungen erfasst werden und miteinander verglichen werden. Es ist auch möglich, das Drehrichtungserkennungsmodul so zu gestalten, dass beide Verfahren verwirklicht werden können, einerseits der Vergleich mit vorbestimmten Leistungskennwerten oder der Vergleich zweier Leistungskennwerte oder mehrerer Leistungskennwerte bei unterschiedlichen Drehrichtungen. Dazu kann das Drehrichtungserkennungsmodul mit Auswahlmitteln versehen sein, über welche eine Bedienperson auswählen kann, welches der Verfahren zum Einsatz kommen kann. Ferner kann das Drehrichtungserkennungsmodul auch so ausgebildet sein, dass es automatisch erkennt, welches Verfahren zum Einsatz kommen muss, beispielsweise, wenn bei einem Vergleich mit einem vorbestimmten Leistungskennwert ein solcher vorbestimmter Leistungskennwert bei keiner Drehrichtung erreicht wird.

Beim Einsatz eines Frequenzumrichters ist es auch möglich, über das Drehrichtungserkennungsmodul in Zusammenwirkung mit dem Frequenzumrichter das Pumpenaggregat so zu betreiben, dass vorbestimmte Leistungskennwerte erreicht werden, beispielsweise Druck- oder Durchfluss und dann bei diesen vorbestimmten Leistungskennwerten die aktuelle Frequenz bestimmt wird und durch Vergleich der Frequenzen bei unterschiedlichen Drehrichtungen ermittelt wird, welches die korrekte Drehrichtung ist. D.h. das Drehrichtungserkennungsmodul kann derart ausgebildet sein, dass ein erster Leistungskennwert als vorgegebener Leistungskennwert durch Ansteuerung des Pumpenaggregates aktuell eingestellt wird und dann gleichzeitig ein zweiter Leistungskennwert, beispielsweise die Ausgangsfrequenz des Frequenzumrichters erfasst wird und auf Grundlage dieses zweiten Leistungskennwertes eine Auswertung zur Erkennung der Drehrichtung durchgeführt wird.

Nachfolgend wird die Erfindung beispielhaft anhand der beigefügten Figuren beschrieben. In diesen zeigt:

Fig. 1 a-c    schematisch dargestellt die Unterscheidung der korrekten Drehrichtung anhand dreier verschieden erfasster Leistungskennwerte,

Fig. 2    schematisch, wie die korrekte Drehrichtung anhand zweier ermittelter Leistungskennwerte erkennbar ist,

Fig. 3 a-c    schrittweise den Ablauf der Drehrichtungserkennung bei unterschiedlichen Drehzahlen,

Fig. 4    in einem Ablaufdiagramm einen bevorzugten Ablauf der Drehrichtungserkennung und

Fig. 5    schematisch den Aufbau eines Pumpenaggregats gemäß der Erfindung

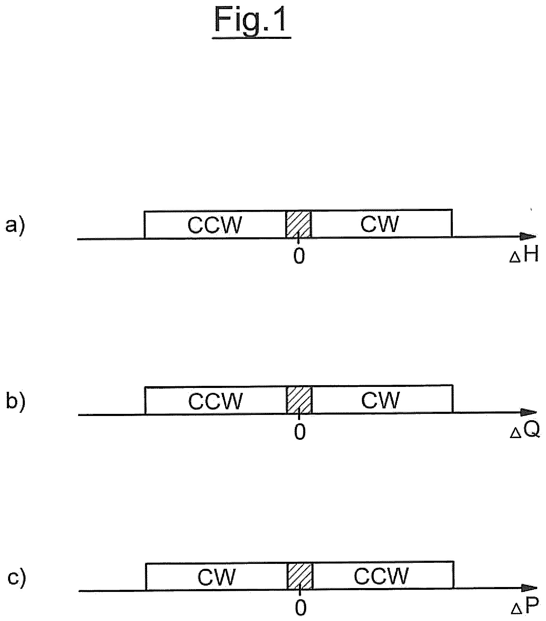

Fig. 1a zeigt die Drehrichtungserkennung anhand des Druckes H, d.h. des Druckes ausgangsseitig der Pumpe. Fig. 1b zeigt die Drehrichtungserkennung anhand des Durchflusses Q durch die Pumpe und Fig. 1c zeigt die Drehrichtungserkennung anhand der Leistung P, d.h. der elektrischen Leistung des Antriebsmotors.

Zur Bestimmung der korrekten Drehrichtung wird das Pumpenaggregat in beiden möglichen Drehrichtungen angetrieben und von einem Drehrichtungserkennungsmodul wird bei jeder Drehrichtung zumindest ein Leistungskennwert, nämlich beispielsweise der Druck H, der Durchfluss Q oder die Leistung P erfasst. Anschließend werden zwischen den bei beiden Drehrichtungen ermittelten Leistungskennwerten die Differenz gebildet. D.h. im Fall von Fig. 1a wird die Druckdifferenz $\Delta P$ zwischen dem Druck $P_{cw}$ in der ersten Drehrichtung und dem Druck $P_{ccw}$ in der zweiten Drehrichtung gebildet. Entsprechend wird für die Ausführungsform gemäß Fig. 1b die Differenz $\Delta Q$ zwischen den Durchflüssen $Q_{cw}$ und $Q_{ccw}$ der beiden Drehrichtungen und gemäß Fig. 1c die Differenz $\Delta P$ der Leistungen $P_{cw}$ und $P_{ccw}$ ermittelt. So ergeben sich folgende Formeln:

$$\Delta P = P_{CW} - P_{CCW}$$

$$\Delta H = H_{CW} - H_{CCW}$$

und

$$\Delta Q = Q_{CW} - Q_{CCW}$$

In Fig. 1a-c ist ein den Nullpunkt umgebender Bereich schraffiert dargstellt. Dies kennzeichnet einen Bereich, in dem auf Grund zu kleiner Differenzen zwischen den bei beiden Drehrichtungen erfassten Leistungskennwerten eine zuverlässige Erkennung der korrekten Drehrichtung nicht möglich ist. Sollte das Ergebnis $\Delta H$, $\Delta Q$ bzw. $\Delta P$ in diesem Bereich liegen, sind weitere Auswertungen, insbesondere möglicherweise manuelle Auswertungen erforderlich, um die korrekte Drehrichtung zu bestimmen.

Wenn die Differenz größer ist, d.h außerhalb dieses schraffierten Bereiches liegt, ist eine eindeutige Bestimmung der korrekten Drehrichtung möglich. So ist zu erkennen, dass in dem Fall, dass der Wert $\Delta H$ größer als Null ist, die erste Drehrichtung CW korrekt ist und dem Fall, dass der Druckunterschied $\Delta H$ kleiner als Null ist, die zweite Drehrichtung CCW die korrekte Drehrichtung ist. Dies ergibt sich dadurch, dass bei korrekte Drehrichtung der Ausgangsdruck der Pumpe höher ist. Entsprechend ist in dem Fall, dass die Differenz $\Delta Q$ der Durchflüsse gemäß obiger Formel positiv ist, die Drehrichtung CW korrekt und in dem Fall, dass diese Differenz $\Delta Q$ negativ ist, die zweite Drehrichtung CCW korrekt. Dies ergibt sich dadurch, dass bei korrekter Drehrichtung der Pumpe ein höherer Durchfluss gegeben ist. Im Fall, dass die Leistung P als Leistungskennwert verglichen wird, ist in dem Fall, dass die Leistungsdifferenz $\Delta P$ gemäß obiger Formel größer als Null ist, die zweite Drehrichtung CCW korrekt und in dem Fall, dass die Differenz $\Delta P$ kleiner Null ist, die erste Drehrichtung CW korrekt ist. Dies ergibt sich dadurch, dass die elektrische Leistungsaufnahme bei der korrekten Drehrichtung geringer ist als bei der nicht richtigen Drehrichtung. Bei Drehung in der korrekten Drehrichtung hat die Pumpe einen höheren Wirkungsgrad und damit eine geringere Leistungsaufnahme.

Es ist zu verstehen, dass auch andere Leistungskennwerte herangezogen werden können. Insbesondere auch die hydraulische Leistung

$$P_{hyd} = H \cdot Q.$$

Dann kann entsprechend die Differenz

$$\Delta P_{hyd} = H_{CW}Q_{CW} - H_{CCW}Q_{CCW}$$

gebildet werden und daran, ob diese Differenz positiv ist oder negativ ist die richtige Drehrichtung erkannt werden. die Drehrichtung, bei welcher die hydraulische Leistung $\Delta P_{hyd}$ höher ist, ist die korrekte Drehrichtung.

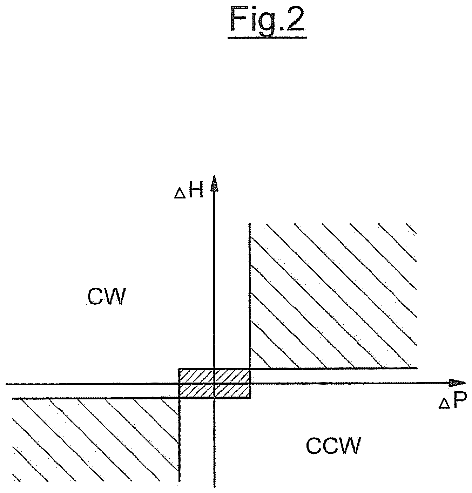

Anhand von Fig. 2 wird die Erkennung der korrekten Drehrichtung anhand zweier erfasster Leistungskennwerte erläutert. Gemäß Fig. 2 erfolgt die Drehrichtungserkennung beispielsweise anhand des Druckes H und der elektrischen Leistung P des Pumpenaggregates. Wie oben beschrieben wird gemäß obiger Formel die Differenz der Drücke bei beiden Drehrichtungen $\Delta H$ und die Differenz der Leistungen $\Delta P$ bei beiden Drehrichtungen errechnet. Wenn nun diese Differenz $\Delta H$ positiv und gleichzeitig die Differenz $\Delta P$ negativ sind, ist die erste Drehrichtung CW korrekt. Wenn die Leistungsdifferenz $\Delta P$ positiv und die Druckdifferenz $\Delta H$ negativ sind, ist die zweite Drehrichtung CCW korrekt, wobei bei dieser Bestimmung die Differenzbildung gemäß oben angegebener Formeln erfolgte. Wie in Fig. 2 angedeutet, gehen die Bestimmungsbereiche, welche in Fig. 2 mit CW und CCW gekennzeichnet sind, über die Nulllinie hinaus. So wird der Bereich, in dem eine zuverlässige automatische Erkennung der korrekten Drehrichtung möglich ist, vergrößert. Die Bereiche, in denen eine Erkennung aufgrund von Messfehlern bzw. Messrauschen nicht möglich ist, wird verkleinert. Diese Bereiche sind in Fig. 2 ebenfalls schraffiert dargestellt. Zu erkennen ist, dass der eng schraffierte Bereich 2 in Umgebung des Nullpunktes verkleinert ist. D.h. es kann eine Drehrichtungserkennung auch dann stattfinden, wenn die Druckdifferenz $\Delta H$ nahe dem Nullpunkt ist, vorausgesetzt, dass gleichzeitig die Leistungsdifferenz $\Delta P$ nicht in diesem Bereich liegt. Umgekehrt ist eine Drehrichtungserkennung auch möglich, wenn die Leistungsdifferenz $\Delta P$ in dem Bereich 2 nahe des Nullpunktes liegt, wenn gleichzeitig die Druckdifferenz $\Delta H$ außerhalb dieses Bereiches liegt.

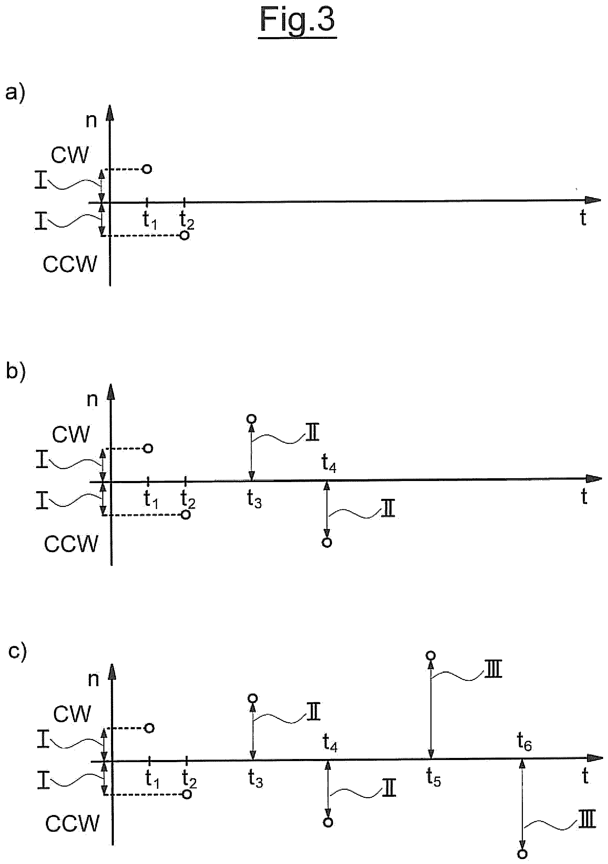

Eine weitere Möglichkeit der Erhöhung der Zuverlässigkeit der Drehrichtungserkennung ist durch Änderung der Drehzahl möglich. Dies in den Fig. 3a-3c dargestellt. Fig. 3a-3c zeigen Diagramme, in denen die Drehzahl n über die Zeit t dargestellt ist. In Fig. 3a ist gezeigt, dass zunächst Messungen der Leistungskennwerte bei einer ersten Drehzahl I durchgeführt werden. Dazu wird der Antriebsmotor zum Zeitpunkt $t_1$ mit der Drehzahl I zunächst in der ersten Drehrichtung CW angetrieben und anschließend mit der gleichen Drehzahl I zum Zeitpunkt $t_2$ in der zweiten Drehrichtung CCW. Gleichzeitig werden zu den Zeitpunkten $t_1$ und $t_2$ die entsprechenden Leistungskennwerte ermittelt und dann gemäß der vorangehenden Beschreibung voneinander subtrahiert, um die korrekte Drehrichtung zu erkennen. Sollte bei der ersten Drehzahl I die korrekte Drehrichtung nicht erkennbar sein, beispielsweise weil die gebildeten Differenzen in dem Bereich der Messungenauigkeit, d. h. dem schraffierten Bereich in den Diagrammen gemäß Fig. 1 und 2 liegen, wird die Messung, wie in Fig. 3b gezeigt ist, bei einer zweiten Drehzahl II zu den Zeitpunkten $t_3$ und $t_4$ wiederholt. Auch zu diesen Zeitpunkten werden dann wieder die Leistungskennwerte erfasst und entsprechend die Differenzen gebildet. Sollte auch bei der Drehzahl II keine Erkennung der Drehrichtung möglich sein, kann die Messung, wie in Fig. 3c gezeigt bei einer dritten Drehzahl III zu den Zeitpunkten $t_5$ und $t_6$ wiederholt werden. Es ist zu verstehen, dass auch noch weitere Drehzahlsteigerungen vorgesehen sein können, bis die Maximaldrehzahl des Pumpenaggregates erreicht ist. Sollte dann immer noch keine Bestimmung der korrekten Drehrichtung möglich sein, müsste eine manuelle Bestimmung durchgeführt werden. Dies kann einer Bedienperson beispielsweise durch eine Signaleinrichtung zu erkennen gegeben werden.

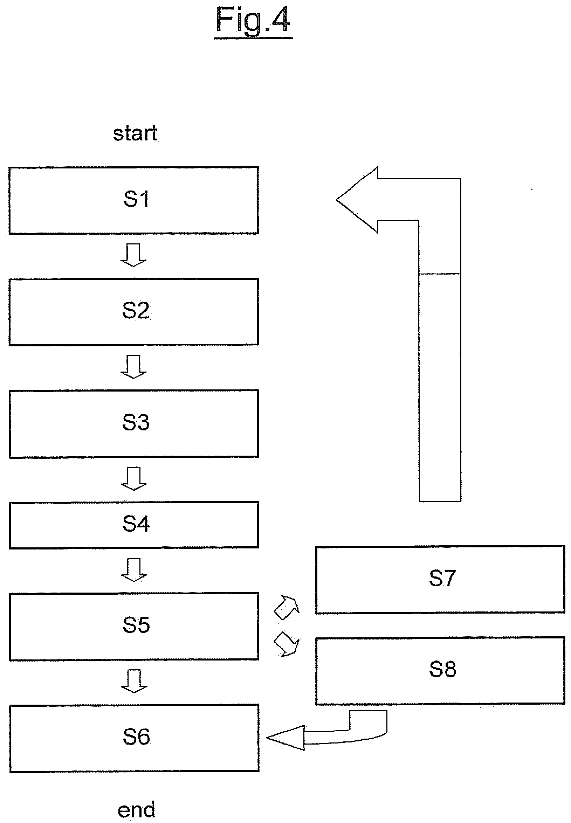

Anhand von Fig. 4 wird nun schematisch der Ablauf der Drehrichtungserkennung beschrieben. In dem Schritt S1 wird zunächst das Pumpenaggregat mit einer ersten Drehzahl I in einer ersten Drehrichtung CW angetrieben. Bei dieser Drehzahl wird ein oder werden mehrere Leistungskennwerte von dem Drehrichtungserkennungsmodul erfasst. Dies können beispielsweise der Druck H, der Durchfluss Q und/oder die Leistung P sein. Anschließend wird im Schritt S2 das Pumpenaggregat angehalten und dann im Schritt S3 mit derselben Drehzahl I in umgekehrter Drehrichtung CCW angetrieben. Bei dieser Drehrichtung werden dann dieselben Leistungskennwerte wie im Schritt S1 erfasst. Im Schritt S4 wird dann die Differenz zwischen den im Schritt S1 und den im Schritt S3 berechneten Leistungskennwerten gebildet. Im Schritt S5 wird dann geprüft, ob die Differenz ausreichend groß ist, um die korrekte Drehrichtung zu bestimmen, d.h. die Differenz außerhalb des Bereichs der Messungenauigkeiten, den schraffierten Bereichen in Fig. 1 und 2, liegt. Wenn die Differenz groß genug ist, wird die korrekte Drehrichtung bestimmt und im Schritt S6 die Drehrichtung des Pumpenaggregates entsprechend eingestellt. Dies kann entweder durch entsprechende Ansteuerung eines Frequenzumrichters erfolgen oder durch Veränderung der Polung der elektrischen Anschlüsse, wobei auch dies automatisch durch Schalter, insbesondere elektronische Schalter im Pumpenaggregat erfolgen kann. Alternativ kann einer Bedienperson durch eine Signaleinrichtung signalisiert werden, dass die elektrischen Anschlüsse manuell geändert werden müssen, um die korrekte Drehrichtung einzustellen.

Wenn im Schritt S5 festgestellt wird, dass die bestimmte Differenz zwischen den Leistungskennwerten kleiner als die Minimaldifferenz zur Bestimmung der korrekten Drehrichtung ist, kann entweder gemäß Schritt S7 ein neuer Durchlauf der Messroutine beginnend mit Schritt S1 bei einer höheren Drehzahl II erfolgen oder aber im Schritt S8 ein manueller Test der korrekten Drehrichtung veranlasst werden, insbesondere wenn zuvor die Auswertung bereits mit der maximal möglichen Drehzahl erfolgt ist.

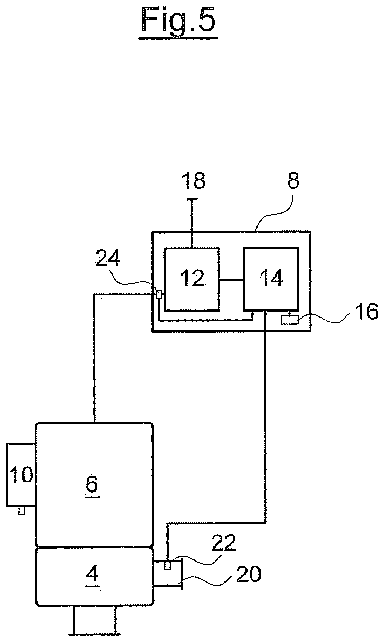

Fig. 5 zeigt schematisch den Aufbau des erfindungsgemäßen Pumpenaggregates. Das Pumpenaggregat besteht aus einer Pumpe 4 und einem elektrischen Antriebsmotor 6. Ferner ist eine Steuereinrichtung 8 zur Ansteuerung des Pumpenaggregates und insbesondere des Antriebsmotors 6 vorhanden. Die Steuereinrichtung 8 ist in Fig. 5 schematisch und vergrößert gezeigt. Es ist zu verstehen, dass die Steuereinrichtung 8 zweckmäßigerweise in einen Klemmenkasten 10 des Pumpenaggregates integriert wird. Die Steuereinrichtung 8 weist einen Frequenzumrichter 12 und ein Drehrichtungserkennungsmodul 14 auf. Darüber hinaus ist eine Anzeigeeinrichtung 16, in Form einer oder mehrerer Signalleuchten oder eines Displays vorgesehen. Die Steuereinrichtung 8 wird über einen elektrischen Anschluss 18 mit Netzspannung versorgt. Die Netzspannung wird über den Frequenzumrichter 12 so in ihrer Frequenz geändert, dass der Antriebsmotor 6 von dem Frequenzumrichter 12 in gewünschter Drehzahl und Drehrichtung angetrieben werden kann.

An der Ausgangs- bzw. der Druckseite der Pumpe 4 ist ferner ein Sensor 22 zum Erfassen des Drucks und/oder des Durchflusses der Pumpe 4 angeordnet. Die Ausgangssignale bzw. Ausgangswerte des Sensors 22 werden, beispielsweise über eine Signalleitung, dem Drehrichtungserkennungsmodul 14 zugeführt. Ferner kann ein Sensor 24 zum Bestimmen der elektrischen Leistung, welche dem Antriebsmotor 6 zugeführt wird, vorgesehen sein, wobei auch das Ausgangssignal des Sensors 24 dem Drehrichtungserkennungsmodul 14 zugeführt wird. Es ist zu verstehen, dass alle diese Sensoren oder auch nur einige dieser Sensoren, beispielsweise Druck-, Durchfluss- und/oder Leistungssensor vorgesehen und mit dem Drehrichtungserkennungsmodul 14 verbunden sein können. Wie oben beschrieben ist es prinzipiell ausreichend, einen Leistungskennwert zum Erfassen der Drehrichtung zu bestimmen.

Das Drehrichtungserkennungsmodul 14 wirkt mit dem Frequenzumrichter 12 derart zusammen, dass es den Frequenzumrichter 12 die korrekte Drehrichtung vorgibt und sicherstellt, dass der Frequenzumrichter 12 im Betrieb das Pumpenaggregat bzw. den Antriebsmotor 6 in der korrekten Drehrichtung antreibt. Ferner kann das Drehrichtungserkennungsmodul 14 den Frequenzumrichter 12 während der Drehrichtungserkennung derart ansteuern, dass er, wie vorangehend beschrieben, nacheinander den Antriebsmotor 6 mit einer vorbestimmten Drehzahl in zwei unterschiedlichen Drehrichtungen antreibt, wobei dabei dann über die Sensoren 22, 24 die Leistungskennwerte erfasst werden.

Für den Fall, dass eine Erkennung der korrekten Drehrichtung nicht möglich sein sollte, kann das Drehrichtungserkennungsmodul 14 über die Signaleinrichtung 16 dies einer Bedienperson zur Anzeige bringen. Über die Signaleinrichtung bzw. Anzeigeeinrichtung 16 können der Bedienperson darüber hinaus dann auch noch Anweisungen oder Schritte vorgegeben werden, eine manuelle Drehrichtungsbestimmung durchzuführen. Die Anzeigeeinrichtung 16 kann als separate Anzeigeeinrichtung für das Drehrichtungserkennungsmodul 14 ausgebildet sein oder eine Anzeigeeinrichtung, beispielsweise ein Display sein, über welches auch andere Funktionen des Pumpenaggregates an der Steuereinrichtung angezeigt werden.

**Bezugszeichenliste**

| 2 | Bereich, in dem die Drehrichtungsbestimmung nicht möglich ist, |
| --- | --- |
| 4 | Pumpe |
| 6 | Antriebsmotor |
| 8 | Steuereinrichtung |
| 10 | Klemmenkasten |
| 12 | Frequenzumrichter |
| 14 | Drehrichtungserkennungsmodul |
| 16 | Anzeigeeinrichtung |
| 18 | Anschlussleitung |
| 20 | Druckseite |
| 22, 24 | Sensor |
| CW | erste Drehrichtung |
| CCW | zweite Drehrichtung |

**Patentansprüche**

1. Pumpenaggregat, welches als Zentrifugalpumpe ausgebildet ist, mit einer Pumpe (4) und einem elektrischen Antriebsmotor (6) **dadurch gekennzeichnet dass** das Pumpenaggregat eine elektronischen Steuereinrichtung(8), mit einem Frequenzumrichter (12) zu Drehzahlsteuerung des Antriebsmotors (6) aufweist, wobei die elektronische Steuereinrichtung (8) ein Drehrichtungserkennungsmodul (14) zum Erkennen der korrekten Drehrichtung (CW, CCW) des Antriebsmotors (6) und der Pumpe (4) aufweist, welches Mittel (22, 24) zum Erfassen zumindest eines Leistungskennwertes (H, Q, P) des Pumpenaggregates aufweist und derart ausgestaltet ist, dass es bei Drehung des Antriebsmotors (6) zumindest einen Leistungskennwert (H, Q, P) erfasst und durch Auswertung des Leistungskennwertes (H, Q, P) die korrekte Drehrichtung (CW, CCW) ermittelt, und dass der Frequenzumrichter (12) und das Drehrichtungsekennenungsmodul (14) derart zusammenwirken, dass der Frequemzumrichter (12) die Drehrichtung (CW, CCW) des Antriebsmotors (6) entsprechend der ermittelten korrekten Drehrichtung einstellt.

2. Pumpenaggregat nach Anspruch 1, **dadurch gekennzeichnet, dass** das Drehrichtungserkennungsmodul (14) derart ausgebildet ist, dass es den zumindest einen erfassten Leistungskennwert (H, Q, P) mit einem bekannten vorgegebenen Leistungskennwert vergleicht.

3. Pumpenaggregat nach Anspruch 1 oder 2, **dadurch gekennzeichnet, dass** als Leistungskennwert der Druck (H) und/oder der Durchfluss (Q) der Pumpe und/oder die Leistung (P) des Antriebsmotors (6) erfasst wird.

4. Pumpenaggregat nach einem der vorangehenden Ansprüche, **dadurch gekennzeichnet, dass** das Drehrichtungserkennungsmodul (14) derart ausgebildet ist, dass es zum Erkennen der korrekten Drehrichtung (CW, CCW) bei Drehung des Antriebsmotors (6) in beiden Drehrichtungen (CW, CCW) jeweils zumindest einen Leistungskennwert (H, Q, P) erfasst und die korrekte Drehrichtung (CW, CCW) durch Vergleich der erfassten Leistungskennwerte (H, Q; P) erkennt.

5. Pumpenaggregat nach Anspruch 4, **dadurch gekennzeichnet, dass** die Steuereinrichtung (8) derart ausgebildet ist, dass das Drehrichtungserkennungsmodul (14) zum Erkennen der korrekten Drehrichtung (CW, CCW) die Steuereinrichtung (8) automatisch zum Drehen des Antriebsmotors (6) in beiden Drehrichtungen (CW, CCW) veranlasst.

6. Pumpenaggregat nach Anspruch 4 oder 5, **dadurch gekennzeichnet, dass** das Drehrichtungserkennungsmodul (14) Mittel (22, 24) zum Erfassen mindestens zweier Leistungskennwerte (H, Q, P) aufweist und derart ausgestaltet ist, dass ein Erkennen der korrekten Drehrichtung (CW, CCW) durch Auswertung mindestens zweier Leistungskennwerte (H, Q, P) erfolgt.

7. Pumpenaggregat nach einem der vorangehenden Ansprüche, **dadurch gekennzeichnet, dass** das Drehrichtungserkennungsmodul (14) mit einer Signaleinrichtung (16) versehen und derart ausgebildet ist, dass für den Fall, dass die korrekte Drehrichtung (CW, CCW) auf Grundlage des zumindest einen erfassten Leistungskennwerte (H, Q, P) von dem Drehrichtungserkennungsmodul (14) nicht erkannt werden kann, dies mittels der Signaleinrichtung (16) signalisiert wird.

8. Pumpenaggregat nach einem der vorangehenden Ansprüche, **dadurch gekennzeichnet, dass** das Drehrichtungserkennungsmodul (14) derart ausgebildet ist, dass ein Erfassen und Auswerten des zumindest einen Leistungskennwertes (H, Q, P) bei zumindest zwei verschiedenen Drehzahlen (I, II) des Antriebsmotors (6) möglich ist.

9. Pumpenaggregat nach Anspruch 8, **dadurch gekennzeichnet, dass** das Drehrichtungserkennungsmodul (14) derart ausgestaltet ist, dass ein Erfassen und Auswerten des zumindest einen Leistungskennwertes (H, Q, P) zunächst bei einer ersten Drehzahl (I) erfolgt und in dem Fall, dass ein Erkennen der korrekten Drehrichtung (CW, CCW) nicht möglich ist, bei zumindest einer zweiten (II), vorzugsweise höheren Drehzahl wiederholt wird.

**Claims**

1. A pump assembly which is designed as a centrifugal pump, with a pump (4) and with an electrical drive motor (6), **characterised in that** the pump assembly comprises an electronic control device (8), with a frequency converter (12) for the control of the rotation speed of the drive motor (6), wherein the electronic control device (8) comprises a rotation direction recognition module (14) for recognising the correct rotation direction (CW, CCW) of the drive motor (6) and of the pump (4), said rotation direction recognition module comprising means (22, 24) for detecting at least one performance characteristic value (H, Q, P) of the pump assembly and being designed in a manner such that on rotation of the drive motor (6), it detects at least one performance characteristic value (H, Q, P) and determines the correct rotation direction (CW, CCW) by way of evaluation of the performance characteristic value (H, Q, P), and that the frequency converter (12) and the rotation direction recognition module (14) interact in a manner such that the frequency converter (12) sets the rotation direction (CW, CCW) of the drive motor (6) according to the determined, correct rotation direction.

2. A pump assembly according to claim 1, **characterised in that** the rotation direction recognition module (14) is designed in a manner such that it compares the at least one detected performance characteristic value (H, Q, P) with a known predefined performance characteristic value.

3. A pump assembly according to claim 1 or 2, **characterised in that** the pressure (H) and/or the flow rate (Q) of the pump and/or the power (P) of the drive motor (6) is detected as the performance characteristic value.

4. A pump assembly according to one of the preceding claims, **characterised in that** the rotation direction recognition module (14) is designed in a manner such that for recognising the correct rotation direction (CW, CCW), it detects in each case at least one performance characteristic value (H, Q, P) on rotation of the drive motor (6) in both directions (CW, CCW), and recognises the correct rotation direction (CW, CCW) by way of comparison of the detected performance characteristic values (H, Q, P).

5. A pump assembly according to claim 4, **characterised in that** the control device (8) is designed in a manner such that the rotation direction recognition module (14), for recognising the correct rotation direction (CW, CCW), automatically prompts the control device (8) into rotating the drive motor (6) in both rotation directions (CW, CCW).

6. A pump assembly according to claim 4 or 5, **characterised in that** the rotation direction recognition module (14) comprises means (22, 24) for detecting at least two performance characteristic values (H, Q, P) and is designed in a manner such that a recognition of the correct rotation direction (CW, CCW) is effected by way of evaluation of at least two performance characteristic values (H, Q, P).

7. A pump assembly according to one of the preceding claims, **characterised in that** the rotation direction recognition module (14) is provided with a signal device (16) and is designed in a manner such that in the case that the correct rotation direction (CW, CCW) cannot be recognised by the rotation direction recognition module (14) on the basis of the at least one detected performance characteristic value (H, Q, P), this is signalised by way of the signal device (16).

8. A pump assembly according to one of the preceding claims, **characterised in that** the rotation direction recognition module (14) is designed in a manner such that a detection and evaluation of the at least one performance characteristic value (H, Q, P) is possible at at least two different rotation speeds (I, II) of the drive motor (6).

9. A pump assembly according to claim 8, **characterised in that** the rotation direction recognition module (14) is designed in a manner such that a detection and evaluation of the at least one performance characteristic value (H, Q, P) is firstly effected at a first rotation speed (I), and in the case that a recognition of the correct rotation direction (CW, CCW) is not possible, is repeated at at least one second (II), preferably higher rotation speed.

**Revendications**

1. Groupe motopompe qui est réalisé en tant que pompe centrifuge, comportant une pompe (4) et un moteur d'entraînement électrique (6), **caractérisé en ce que** le groupe motopompe présente un dispositif électronique de commande (8), avec un convertisseur de fréquences (12) pour la commande de la vitesse de rotation du moteur d'entraînement (6), dans lequel le dispositif électronique de commande (8) présente un module de détection du sens de rotation (14) destiné à déceler le sens de rotation correct (CW, CCW, ou horaire, antihoraire) du moteur d'entraînement (6) et de la pompe (4), lequel présente des moyens (22, 24) de détection d'au moins une valeur caractéristique de performance (H, Q, P) du groupe motopompe, et est réalisé de telle sorte qu'il détecte au moins une valeur caractéristique de performance (H, Q, P) lors de la rotation du moteur d'entraînement (6) et détermine le sens de rotation correct (CW, CCW) par évaluation de la valeur caractéristique de performance (H, Q, P), et de telle sorte que le convertisseur de fréquence (12) et le module de détection du sens de rotation (14) coopèrent de façon à ce que le convertisseur de fréquence (12) règle le sens de rotation (CW, CCW) du moteur d'entraînement (6) en fonction du sens de rotation correct déterminé.

2. Groupe motopompe selon la revendication 1, **caractérisé en ce que** le module de détection du sens de rotation (14) est réalisé de telle sorte qu'il compare la valeur caractéristique de performance (H, Q, P) détectée, au moins au nombre de une, avec une valeur caractéristique de performance connue et prédéfinie.

3. Groupe motopompe selon la revendication 1 ou 2, **caractérisé en ce que** la pression (H) et/ou le débit (Q) de la pompe et/ou la puissance (P) du moteur d'entraînement (6) est(sont) détecté(e/s) en tant que valeur caractéristique de performance.

4. Groupe motopompe selon l'une quelconque des revendications précédentes, **caractérisé en ce que** le module de détection du sens de rotation (14) est réalisé de telle sorte que pour déceler le sens de rotation correct (CW, CCW) lors de la rotation du moteur d'entraînement (6) dans les deux directions (CW, CCW), il détecte respectivement au moins une valeur caractéristique de performance (H, Q, P) et décèle le sens de rotation correct (CW, CCW) par comparaison des valeurs caractéristiques de puissance détectées (H, Q ; P).

5. Groupe motopompe selon la revendication 4, **caractérisé en ce que** le dispositif de commande (8) est réalisé de telle sorte que le module de détection du sens de rotation (14), pour déceler le sens de rotation correct (CW, CCW), ordonne automatiquement au dispositif de commande (8) la rotation du moteur d'entraînement (6) dans les deux sens de rotation (CW, CCW).

6. Groupe motopompe selon la revendication 4 ou 5, **caractérisé en ce que** le module de détection du sens de rotation (14) présente des moyens (22, 24) pour détecter au moins deux valeurs caractéristiques de puissance (H, Q, P) et est configuré de telle sorte qu'une détection du sens de rotation correct (CW, CCW) a lieu par évaluation d'au moins deux valeurs caractéristiques de performance (H, Q, P).

7. Groupe motopompe selon l'une des revendications précédentes, **caractérisé en ce que** le module de détection du sens de rotation (14) est doté d'un dispositif de signalisation (16) et est réalisé de façon telle que, dans le cas où le sens de rotation correct (CW, CCW) ne peut pas être détecté par le module de détection du sens de rotation (14) sur la base de la valeur caractéristique de performance (H, Q, P) détectée, au moins au nombre de une, cela est signalé au moyen du dispositif de signalisation (16).

8. Groupe motopompe selon l'une quelconque des revendications précédentes, **caractérisé en ce que** le module de détection du sens de rotation (14) est réalisé de telle sorte qu'une détection et une évaluation de la valeur caractéristique de performance (H, Q, P), au moins au nombre de une, sont possibles avec au moins deux vitesses de rotation différentes (I, II) du moteur d'entraînement (6).

9. Groupe motopompe selon la revendication 8, **caractérisé en ce que** le module de détection du sens de rotation (14) est réalisé de telle sorte qu'une détection et une évaluation de la valeur caractéristique de performance (H, Q, P), au moins au nombre de une, ont d'abord lieu pour une première vitesse de rotation (I), et dans le cas où une détection du sens de rotation correct (CW, CCW) n'est pas possible, sont répétées avec au moins une deuxième (II) vitesse de rotation, de préférence plus élevée.

# Fig.1

a)

$\triangle H$

b)

$\triangle Q$

c)

$\triangle P$

Fig.2

# Fig.3

a)

b)

c)

# Fig.4

start

S1

S2

S3

S4

S5

S6

S7

S8

end

# Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 324156 A
- EP 1554969 A1